# FASCICULE DE BREVET EUROPEEN

(11) **EP 1 491 674 B1**
(45) Date de publication et mention de la délivrance du brevet: **28.10.2009**
(21) Numéro de dépôt: 04356108.3
(22) Date de dépôt: 24.06.2004
(51) Int. Cl.: D04H 3/04, D04H 13/00, B29C 70/08, B32B 3/10, B29C 70/22

(54) **Nouveau complexe de renforcement avec fils drainants**
Neue Verstärkungsstruktur mit Drainagefäden
Novel reinforcing structure with drainage threads

(30) Priorité: 24.06.2003 FR 0307605
(43) Date de publication de la demande: 29.12.2004
(73) Titulaire: CHOMARAT COMPOSITES, 75002 Paris (FR)
(72) Inventeur: Baudonnel, Jacques, 07160 Le Cheylard (FR)
(74) Mandataire: Sarlin, Laure V.

(56) Documents cités:
- EP-A- 0 033 244
- US-A- 4 460 633
- US-A- 4 568 593
- US-A- 4 581 275
- PATENT ABSTRACTS OF JAPAN vol. 1999, no. 02, 26 février 1999 (1999-02-26) & JP 10 292255 A (NITTO BOSEKI CO LTD; POLYMER PROCESSING RES INST), 4 novembre 1998 (1998-11-04)

## Description

La présente invention est relative au domaine des produits de renforcement unidirectionnels à caractère cohérent, qui sont plus particulièrement destinés à constituer des armatures.

Dans de nombreux domaines, il est souhaitable de pouvoir renforcer un produit fabriqué de manière à accroître certaines caractéristiques mécaniques conférées par la matière constitutive mise en oeuvre pour la réalisation du dit produit. Il est ainsi connu d'utiliser des armatures de renforcement en relation avec le ciment, le béton, les matières plastiques et les résines.

Dans les domaines ci-dessus, une armature de renforcement est constituée, généralement à partir d'un réseau maillé qui est confectionné ou produit à partir de fibres qui peuvent être unidirectionnelles pour certaines applications ou tissées en laizes de plus ou moins grande largeur.

Une telle armature de renforcement est, par exemple, constituée d'un complexe de renfort unidirectionnel composé à partir de nappes de fibres ou fils de verre ou de carbone ou d'aramide qui sont liées par des coutures en lignes ou en zigzag au moyen d'un fil en polyester. Un tel produit présente un certain nombre d'inconvénients parmi lesquels il faut citer un état de surface marqué dû à la présence de coutures créant des surépaisseurs ou des zones de résistance moindre. Un tel état de surface est, dans certains cas, incompatible avec l'application visée. De plus, la couture vient serrer les fils de renfort diminuant ainsi l'accessibilité de ces fils pour la résine qui sera ultérieurement injectée lors de la fabrication de pièces composites.

Parmi les inconvénients, il convient aussi de citer le coût de production d'un tel produit, étant donné que les machines à mettre en oeuvre doivent posséder des têtes multi-aiguilles pour l'établissement des coutures en ligne ou en zigzag, chaque aiguille devant nécessairement être alimentée avec un fil propre. La mise en service d'une telle machine demande donc un travail préparatoire important qui vient grever le prix de production du produit.

Un autre inconvénient tient aussi à la présence de fils de couture en matière différente de celle des fibres de verre ou de carbone ou d'aramide constitutifs des nappes. Ces fils de couture empêchent les fils de renfort d'être parfaitement droits, ce qui altère les caractéristiques mécaniques (dont le module à l'origine) de la pièce composites finie.

Par ailleurs, dans le cas de complexes de renforcement présentant une couverture quasi-totale, c'est-à-dire dans le cas de complexes non-ajourés, des problèmes de disponibilité pour la résine injectée lors de la fabrication de pièces moulées peuvent se poser. Les complexes de renforcement de l'art antérieur présentant une couverture sensiblement égale à 100 % n'autorisent pas, le plus souvent, une diffusion suffisante de la résine thermoplastique ou thermodurcissable ultérieurement injectée. Cela est également le cas pour les procédés de diffusion sous vide de la résine, dits d'« infusion » pour lesquels la répartition homogène de la résine est primordiale.

Dans ce contexte, l'objet de l'invention est de remédier à ces inconvénients en proposant un nouveau complexe de renforcement unidirectionnel à caractère cohérent et semi-rigide et se présentant sous une forme plane qui soit obtenu selon un procédé simplifié. Par complexe de renforcement unidirectionnel, on entend un complexe fibreux dans lequel les fils assurant la fonction de renforcement du complexe sont tous tendus et orientés dans la même direction et sont donc tous sensiblement parallèles entre eux. Ces fils peuvent être répartis en une ou deux nappes. Par caractère cohérent, il convient de considérer que le produit selon l'invention est réalisé de manière à présenter une tenue propre et à être capable de résister à certaines contraintes de manipulation, voire de mise en oeuvre pour l'obtention d'un produit semi-fini ultérieur.

Pour atteindre les objectifs ci-dessus, le complexe de renforcement unidirectionnel pour la réalisation de pièces composites à base de résine thermodurcissable ou thermoplastique injectée, dans lequel la fonction de renforcement est assurée par une série de fils de renfort parallèles entre eux et organisés en une ou deux nappes de façon à ce que le complexe de renforcement présente une couverture sensiblement de 100%, est caractérisé en ce que :
■ des fils drainants, parallèles entre eux et aux fils de renfort, sont répartis, de façon espacée, au sein de la ou des nappes de fils de renfort assurant un drainage de la résine thermodurcissable ou thermoplastique injectée lors de la réalisation de pièces composites,
■ et la liaison entre les fils constitutifs du complexe de renforcement est assurée par une nappe ajourée transversale de fils de liage composés d'une âme fibreuse enrobée d'une matière thermoplastique et s'étendant transversalement aux fils de renfort et aux fils drainants en étant croisés avec ces derniers sans entrelacement, lesdits fils de renfort et fils drainants étant liés, à leur intersection avec les fils de liage de la nappe transversale, par la matière thermoplastique.

La liaison du complexe selon l'invention est principalement réalisée à partir de fils enrobés, déjà disponibles sur le commerce, supprimant ainsi des étapes lourdes de réalisation et permettant d'obtenir un état de surface satisfaisant.

Par ailleurs, les fils drainants, présents au sein des fils de renfort, ont une fonction de diffuseur pour la résine ultérieurement injectée lors de la fabrication de pièces composites. Par fils drainants, on entend des fils de renfort munis d'un accessoire facilitant le drainage d'une résine injectée dans le complexe de renforcement selon l'invention. Cet accessoire ménage un espace autour du fil drainant, espace qui servira de passage pour la résine lors de sa diffusion au sein du complexe de renforcement.

La présente invention a également pour objet un procédé de fabrication d'un complexe de renforcement unidirectionnel selon l'invention qui comprend les étapes suivantes :
■ constituer une première nappe non ajourée de fils de renfort parallèles entre eux dans laquelle des fils drainants parallèles entre eux et aux fils de renfort sont répartis, superposer, sur cette première nappe, une nappe transversale de fils de liage espacés et composés d'une âme fibreuse enrobée d'une matière thermoplastique s'étendant transversalement aux fils de renfort et aux fils drainants de la première nappe en étant croisés sans entrelacement,
■ et lier lesdites nappes par chauffage entraînant la fusion au moins partielle de la matière thermoplastique des fils de liage, compression et refroidissement.

Selon un autre de ses aspects, la présente invention concerne l'utilisation d'un complexe de renforcement tel que défini ci-dessus, pour la fabrication de skis, de pales d'éoliennes, ou d'éléments pultrudés, un tel complexe étant particulièrement adapté à la fabrication de pales d'éoliennes.

Diverses autres caractéristiques ressortent de la description faite ci-dessous en référence aux dessins annexés qui montrent, sous forme schématique et à titre d'exemples non limitatifs, des formes de réalisation de l'objet de l'invention.
La **fig. 1** est une perspective partielle d'un complexe de renforcement conforme à l'invention.
La **fig. 2** est une coupe partielle prise, volontairement à plus grande échelle, sensiblement selon le plan **I-I** de la **fig. 1**.
La **fig. 3** est une coupe partielle prise volontairement à plus grande échelle, sensiblement selon le plan **II-II** de la **fig. 1**.
La **fig. 4** est une représentation schématique d'un fil drainant **3₁** utilisé dans la présente invention et la **fig.4A** une vue selon la coupe **IVA**.
La **fig. 5** est une représentation schématique d'une autre variante de fil drainant **3₁** utilisé dans la présente invention et la **fig. 5A** une vue selon la coupe **VA**.
La **fig. 6** est une coupe, analogue à la **fig. 2**, mais illustrant une autre variante de réalisation.
La **fig. 7** est une coupe, analogue à la **fig. 3**, de la variante de réalisation selon la **fig. 6**.
La fig. 8 est une coupe, analogue à la fig. 2, mais illustrant une autre variante de réalisation.
La **fig. 9** est une coupe, analogue à la **fig. 2**, mais illustrant une autre variante de réalisation.

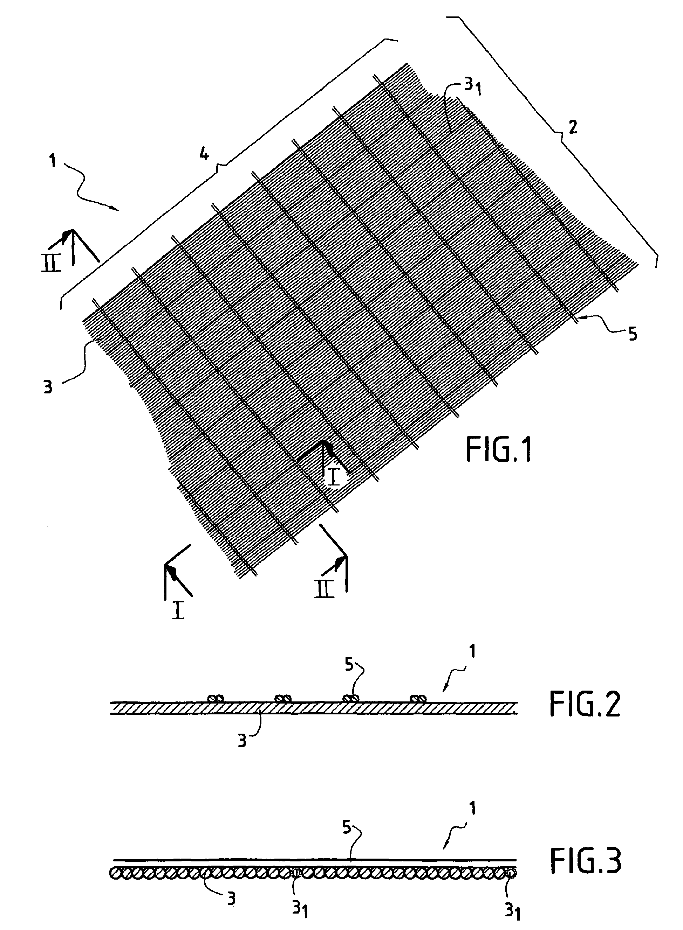

La **fig. 1** montre que le complexe de renforcement selon l'invention, désigné dans son ensemble par la référence **1**, comporte au moins une première nappe **2** de fils de renfort **3**, appelés par convention fils de chaîne par analogie avec les procédés par tissage, et qui s'étendent parallèlement entre eux dans un même plan. Comme le montre la **fig. 1**, ces fils de renfort **3** sont jointifs, afin d'obtenir un complexe de renforcement sensiblement non ajouré, c'est à dire que le complexe de renforcement présente une couverture sensiblement égale à 100 %. La liaison entre les fils de renfort de la première nappe est assurée par une nappe transversale **4** de fils de liage **5** composés d'une âme fibreuse enrobée d'une matière thermoplastique, appelés par convention fils de trame, qui s'étendent aussi parallèlement entre eux et qui sont croisés sans entrelacement avec les fils de renfort **3** de la première nappe **2**. Dans les exemples illustrés aux **fig. 1** et **2**, les fils de liage **5** enrobés s'étendent selon une direction générale qui est orthogonale à celle des fils de renfort **3**. Il doit, cependant, être considéré qu'une orientation oblique pourrait aussi être retenue. Les fils de liage **5** enrobés comportent une âme à base d'une matière similaire ou non à celle des fils de renfort **3**, qui est enrobée d'une couche de matière thermoplastique. Cette nappe transversale **4** de fils de liage **5** est beaucoup moins dense que la première nappe **2** de fils de renfort **3** et forme en fait un réseau parallèle ajouré. Dans la nappe transversale **4**, les fils de liage sont espacés les uns des autres. Il peut, également, être envisagé que les fils de liage **5** enrobés soient répartis par groupes de deux, trois ou quatre fils, ces groupes étant espacés. L'espacement est de préférence régulier. L'espacement existant entre chaque fil de liage ou groupe de fils de liage est réalisé selon un pas d'espacement avantageusement compris entre 1 et 10 cm.

Par opposition aux fils de liage **5** enrobés de la nappe transversale **4**, les fils de renfort **3** de la première nappe sont non-enrobés. Les fils de liage **5** enrobés de la nappe transversale assure la cohésion du complexe de renforcement **1** selon l'invention, alors que les fils de renfort **3** de la première nappe assure la fonction de renfort et ce, de façon unidirectionnelle. Dans le cas du complexe unidirectionnel selon l'invention, on peut considérer que 100 % des fils assurant la fonction de renfort sont orientés dans la même direction, à savoir la direction du renforcement. Comme illustré aux **fig. 1, 2** et **3**, les fils de renfort **3** de la première nappe **2** sont beaucoup plus nombreux que les fils de liage **5** enrobés de la nappe transversale **4** et sont également de dimension (titrage) supérieure, c'est pourquoi le complexe selon l'invention est qualifié de complexe de renfort unidirectionnel, les fils de renfort **3** de la première nappe **2** donnant la direction de renforcement.

Les nappes **2** et **4** sont associées pour posséder une tenue relative conférant un caractère cohérent au complexe de renforcement **1**. L'interliaison entre les fils de renfort **3** de la première nappe **2** et les fils de liage **5** enrobés de la nappe transversale **4** est assurée par fusion ou ramollissement, de la matière thermoplastique enrobant les fils de liage **5**, suivi de son retour à l'état solide. La liaison entre les fils de renfort **3** de la première nappe **2** et les fils de liage **5** enrobés de la nappe transversale **4** se fait à leur intersection et ce grâce à la matière thermoplastique servant d'enrobage aux fils de liage **5**. L'enrobage des fils de liage **5** doit être suffisant pour permettre la liaison de la totalité des fils de renfort 3 de la première nappe **2** entre eux et avec la nappe transversale **4**. A titre d'exemple, on pourra utiliser des fils de liage **5** présentant entre 10 et 500 g de matière thermoplastique pour 1 000 mètres linéaires et à raison, par exemple, de un fil de liage tous les centimètres.

Pour améliorer la diffusion de la résine thermodurcissable ou thermoplastique, injectée à l'état liquide ou pâteux, lors de la fabrication de pièces composites à l'aide du complexe de renforcement selon l'invention, il est prévu de disposer au sein de la nappe **2** de fils de renfort **3**, des fils drainants **3₁** à fonction drainante. Ces fils drainants **3₁** s'étendent parallèlement entre eux et parallèlement aux fils de renfort **3**.

Les fils drainants **3₁** peuvent être définis comme étant des fils de renfort **3** possédant un habillage drainant. Ces fils drainants permettent la formation de passages facilitant la circulation de la résine ultérieurement injectée au sein du complexe de renforcement **1**.

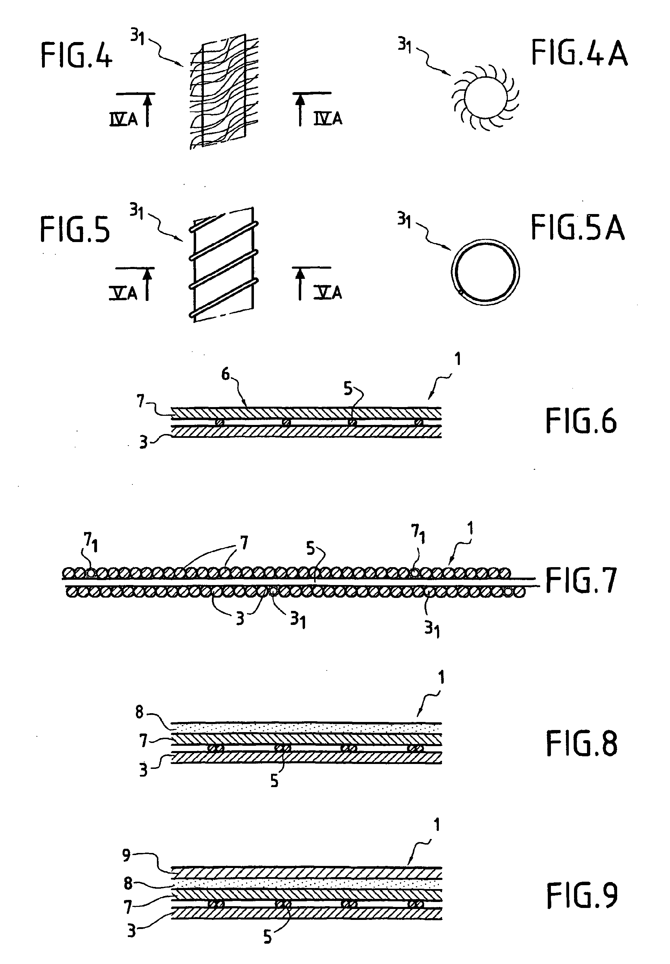

Selon un premier exemple de réalisation présenté à la **fig.4**, les fils drainants **3₁** possèdent une fonction drainante et se présentent sous la forme de fils de renfort, avantageusement en fibres de verre, habillés de fibres de capillarité suffisante pour drainer la résine injectée. Les fibres jouant le rôle d'accessoire du fil de renfort utilisé peuvent, par exemple, être des fibres hydrophiles de coton ou des fibres cellulosiques ou encore des fibres en polypropylène, polyester ou polyéthylène téréphtalate. Ces fibres ont un titre avantageusement compris entre 0,1 et 17 décitex. Le poids déposé de ces fibres autour du fil de renfort est, par exemple, compris entre 5 et 50 g pour 100 mètres linéaires. Le fil de renfort seul présente, par exemple, un titre de 1200 tex et de 1350 tex après habillage avec les fibres drainantes. Dans ce cas, les fils drainants utilisés peuvent être qualifiés de fils poilus.

Selon un second exemple de réalisation présenté à la **fig. 5**, les fils drainants **3₁** se présentent sous la forme de fils guipés, c'est-à-dire de fils de renfort sur chacun desquels un monofilament vient s'enrouler. Le monofilament est, avantageusement, en polyamide, polyéthylène téréphtalate, polypropylène ou métal. Le diamètre de ce monofilament est, de préférence, compris entre 0,1 et 2 mm. Le poids déposé de ce monofilament autour du fil de renfort est, par exemple, compris entre 1 et 50 g pour 100 mètres linéaires. La torsion d'assemblage, quant à elle, est, avantageusement, comprise entre 20 et 200 tours par mètre linéaire.

Selon une autre variante, il peut être envisagé d'utiliser, en tant que fil drainant, deux fils de renfort juxtaposés par poudrage avec une poudre thermoplastique ou thermodurcissable compatible avec la résine ultérieurement injectée. Ces deux fils sont de titrage très différent, le titre du plus petit pouvant tendre jusqu'à zéro. A titre d'exemple, un fil de renfort de 1 200 tex collé à un autre fil de renfort de 68 tex, grâce à une poudre thermoplastique, pourra jouer le rôle de réseau de fluage.

Les fils drainants sont répartis de façon espacée, au sein de la nappe **2** de fils de renfort **3**. Cette répartition est, de préférence, régulière et le pas d'espacement existant entre deux fils drainants est, avantageusement, compris entre 10 et 500 mm. On pourra également choisir de disposer un fil drainant **3₁** tous les 10 à 20 fils de renfort **3**.

Selon une variante de l'invention, non représentée, il est également possible d'inclure, au sein de la première nappe **2**, des fils raidisseurs parallèles entre eux et aux fils de renfort **3**.

La présence de fils raidisseurs renforce la tenue du complexe et minimise les risques de chasser les fils de renfort dans les zones présentes entre les fils de liage. Ces fils raidisseurs sont parallèles à la direction de déplacement du complexe selon l'invention, donnée par l'orientation des fils de renfort, cette direction correspondant également à la direction préférentielle d'injection de la résine.

Les fils raidisseurs **3₁** ont pour fonction, d'une part, de renforcer la tenue du complexe fibreux pour éviter que, lors de l'injection ultérieure d'une résine, les fils de renfort 3 ne s'écartent trop les uns des autres, dans les zones situées entre les fils de liage **5** et, d'autre part, de garder les fils de renfort **3** parfaitement tendus garantissant ainsi au composite obtenu ultérieurement un module et des performances maximales.

Par fils raidisseurs, on entend, en particulier, des fils qui présentent une raideur comprise entre 1 et 5 mg, de préférence entre 0,5 et 4,5 mg. Cette raideur est mesurée avec un appareil de mesure de rigidité (en anglais Bending Resistance/Stiffness Tester) le « Teledyne Gurley » de la Société GURLEY PRECISION INSTRUMENTS. Les mesures sont effectuées sur un fil de 4,6 cm de longueur positionné au deuxième trou de l'appareil en partant du bas, les réglages suivants sur l'appareil étant utilisés : length : 1", width : 2", weight position 4", weigth : 200.

Ces fils raidisseurs **3₁** sont, par exemple, constitués d'une matière fibreuse et d'une matière thermoplastique. Ils correspondent, en fait, à des fils de renfort **3** ayant préalablement subi une étape d'habillage avec une matière thermoplastique. La matière thermoplastique représente, avantageusement, 5 à 60 % du poids du fil raidisseur.

Dans certains cas, la matière thermoplastique utilisée peut avoir la caractéristique de se dissoudre dans la résine ultérieurement injectée, comme, par exemple, le PVAC se dissout dans les résines polyester ou vinylester. Le fil à fonction initiale de raidisseur se transforme alors en fil de renfort au sein de la pièce composite finale et contribue ainsi après son imprégnation à la performance globale de la pièce.

Les fils raidisseurs sont, par exemple, des filaments de renfort comélés avec des filaments thermoplastiques, des fils composés d'une âme fibreuse enrobée d'une matière thermoplastique, ou bien des fils composés d'une âme fibreuse recouverte, au moins partiellement, d'une poudre thermoplastique.

Les fils raidisseurs peuvent, également, se présenter sous la forme de fils de renfort préimprégnés ou poudrés avec une résine thermodurcie, du type époxy, phénolique ou polyester notamment représentant de 1 à 60 % du poids du fil raidisseur.

Selon une autre variante, des fils raidisseurs métalliques ou des fils synthétiques monobrins pourront être utilisés.

On choisira, de préférence, de disposer un fil raidisseur entre deux fils drainants **3₁**. De façon avantageuse, les fils raidisseurs sont espacés selon le même pas que les fils drainants **3₁** mais décalés d'un demi-pas par rapport à ces derniers.

Tout comme les fils **3** et **3₁**, les fils raidisseurs sont liés au sein du renfort **1**, grâce aux fils de liage **5** qu'il croisent sans entrelacement.

Selon un mode de réalisation préféré, représenté aux **fig. 6** et **7**, le produit **1** selon l'invention présente une deuxième nappe **6** de fils de renfort 7 parallèles entre eux et à ceux de la première nappe **2** disposés dans un second plan, les fils de liage **5** enrobés de la nappe transversale **4** étant emprisonnés entre les fils de renfort **3** de la première nappe **2** et les fils de renfort **7** de cette deuxième nappe **6**. Là encore, il est implicite que les fils de renfort **7** de la deuxième nappe **6** sont non-enrobés. Les fils de renfort **7** de cette deuxième nappe **6** sont également liés, au moins localement, aux fils de liage **5** enrobés, par fusion de la matière thermoplastique, la liaison ayant lieu à l'intersection des fils de renfort **7** de la deuxième nappe **6** avec les fils de liage **5** enrobés de la nappe transversale **4**. La quantité de matière thermoplastique doit donc être adaptée pour que la liaison de la première nappe **2** avec la nappe transversale **4** et la liaison de la troisième nappe **6** avec la nappe transversale **4** soient assurées.

Comme dit précédemment, la nappe **4** de fils de liage **5** est beaucoup moins dense que la ou les nappes de fils de renfort. Les fils de liage sont présents en quantité juste nécessaire pour assurer la liaison entre les fils de renfort. Aussi, de façon avantageuse, au moins 95 % en poids du complexe selon l'invention est constitué de fils de renfort **3** et éventuellement **7**.

Là encore, la deuxième nappe **6** de fils de renfort **7** comporte des fils drainants **7₁** s'étendant parallèlement aux fils de renfort **7**. Les fils drainants **7₁** présentent, de préférence, les mêmes caractéristiques et sont répartis comme les fils drainants **3₁** au sein de la première nappe **2** de fils de renfort **3**. Cependant, de façon avantageuse, les fils drainants **7₁** seront décalés d'un demi-pas par rapport aux fils drainants **3₁**. De façon accessoire, la deuxième nappe **6** peut, également, contenir des fils raidisseurs, parallèles aux fils de renfort 7, tels que définis précédemment.

En termes de structure, les nappes **2** et **6** seront, de préférence, identiques.

Bien entendu, les fils drainants **3₁** et **7₁** , tout comme les fils de renfort **3** et **7**, croisent les fils de liage **5**, de la nappe transversale **4**, sans entrelacement.

Dans les dessins annexés, les nappes **2** et **6** de fils de renfort **3** et **7** sont représentées avec des fils de renfort monofilaments, pour plus de clarté. Bien entendu, dans la pratique, ces nappes sont constituées généralement de fils de renfort multifilaments s'étendant sous forme de faisceaux.

Les fils de renfort **3** et **7** sont de préférence jointifs dans chacune des nappes **2** et **6**. Il peut également être prévu, selon une variante non préférée mais qui ne doit pas pour autant être exclue, que les fils de renfort **3** et **7** soient disposés en mèches, les mèches de la première nappe **2** étant, de préférence, jointives avec les mèches de la deuxième nappe **6**. Préférentiellement, ces mèches s'étendent à espace constant et l'espace pour la nappe **2** est identique à l'espace pour la nappe **6**. La possibilité d'avoir des fils de renfort jointifs dans l'une des nappes **2** ou **6** et des fils de renfort disposés en mèches dans l'autre nappe n'est pas non plus à exclure. Dans tous les cas illustrés dans la présente invention, les fils de renfort répartis en une ou éventuellement deux nappes, forment un réseau unidirectionnel de renforcement assurant au complexe selon l'invention une couverture sensiblement égale à 100 %. A titre non limitatif, les fils de renfort **3** et **7** peuvent chacun indépendamment posséder un titre compris entre 20 et 1 000 tex pour des fils d'aramide, entre 68 et 9 600 tex pour des fils de verre ou de basalte et entre 68 et 6 000 tex pour des fils de carbone. Ces fils peuvent se présenter sous la forme de monobrins de section droite transversale circulaire ou analogue, de monobrins à caractère plat ou sous une forme multifilamentaire, étalée ou non, à la manière d'une mèche ou, encore, organisée pour que les filaments s'étendent parallèlement entre eux. De manière préférée, les fils de renfort sont multifilamentaires. Les fils de renfort peuvent être avec ou sans torsion. De façon avantageuse, les fils de renfort peuvent également, dans la première nappe **2** et/ou la deuxième nappe **6**, être voluminisés ou texturés et joueront alors une fonction supplémentaire de réserve pour la matière ou résine thermodure qui sera ultérieurement injectée.

Les fils de liage **5** enrobés sont, de manière générale, plus raides que les fils de renfort **3** et **7**, et présentent, par exemple, un titre compris entre 30 et 600 tex. Néanmoins, il peut être considéré que la fonction de renforcement du complexe selon l'invention est principalement assurée par les fils de renfort 3 de la première nappe et éventuellement les fils de renfort **7** de la seconde nappe quand celle-ci est présente. Les fils de liage **5** enrobés ont, quant à eux, pour unique fonction d'assurer la cohérence du complexe et sont tous orientés sensiblement dans la même direction.

Les fils de renfort **3** et **7**, ainsi que l'âme fibreuse des fils de liage **5** enrobés et les fils de renfort constitutifs des fils drainants **3₁** et **7₁** sont, par exemple, dans une matière choisie parmi les suivantes : verre, basalte, carbone, aramide, synthétiques Haute Performance (HP). La matière thermoplastique constitutive des fils de liage **5** enrobés est choisie parmi les suivantes : le polypropylène, le polyéthylène, la polyamide, le polyéthylène téréphtalate, le polyester, l'éthylènevinylacétate, le PVAC et leurs mélanges.

Les fils de renfort **3** sont, de préférence, de même nature et composition pour l'ensemble de la première nappe **2**. Il en est de même pour l'âme des fils de liage **5** enrobés de la nappe transversale **4**, pour les fils de renfort **7** de la deuxième nappe **6** et pour les fils de renfort constitutifs des fils drainants **3₁** et **7₁**.

Le complexe selon l'invention est qualifié de plan, par opposition aux complexes de renforcement liés par couture qui présentent un état de surface irrégulier. Le complexe selon l'invention présente, quant à lui, une surface sensiblement plane.

La présente invention a également pour objet un procédé de fabrication d'un complexe de renforcement selon l'invention qui comprend les étapes suivantes :
■ constituer une première nappe non ajourée **2** de fils de renfort **3** parallèles entre eux, dans laquelle des fils drainants **3₁** parallèles entre eux et aux fils de renfort **3** sont répartis, superposer, sur cette première nappe, une nappe transversale **4** de fils de liage **5** espacés et composés d'une âme fibreuse enrobée d'une matière thermoplastique s'étendant transversalement aux fils de renfort **3** et aux fils drainants **3₁** de la première nappe **2** en étant croisés sans entrelacement,
■ et lier lesdites nappes par chauffage entraînant la fusion au moins partielle de la matière thermoplastique des fils de liage **5**, compression et refroidissement.

Les fils de renfort et les fils drainants, dits de chaîne, constituant la première nappe sont déposés et tendus dans le sens de production selon des techniques connues de l'homme de l'art mettant, par exemple, en oeuvre un couple de cylindre et rouleau. Les fils de trame de la nappe transversale de fils de liage sont, par exemple, déposés à l'aide d'un chariot trameur ou d'une machine turbine. Une nouvelle nappe de fils de chaîne peut alors être superposée à la nappe de fil de trame. Les différentes nappes sont ensuite passées dans une zone de chauffage avec action de calandrage, de manière à faire fondre l'enduction des fils de liage **5** et à réaliser par cette fusion un collage entre les fils des nappes, de manière à conférer une cohésion entre les différentes nappes **2**, **4** et **6** et procurer une tenue propre au complexe de renforcement 1 qui peut alors être manipulé et utilisé pour transformation.

Des conditions opératoires convenables pour atteindre un tel résultat font, par exemple, intervenir une montée en température dans une enceinte de l'ordre de 160 à 230 °C selon les matériaux matrice utilisés, puis l'établissement d'une pression par calandrage comprise entre 0,5 à 5 bars avant d'imposer un refroidissement à température ambiante. Ainsi, le produit **1** selon l'invention peut être obtenu de manière simple et propre. Un tel produit **1** est également facilement stockable, manipulable et sa découpe est aisée. Le produit selon l'invention est parfaitement adapté pour servir d'armature de renfort pour des résines ou bitumes. Un tel produit se caractérise néanmoins par une faculté de déformation élastique, le rendant éventuellement enroulable.

Par ailleurs, la présence des fils drainants au sein des nappes de fils de renfort permet de faciliter la diffusion de résine injectée lors de la fabrication de pièces composites. Les pièces obtenues dans un temps de cycle moindre sont, ainsi, plus homogènes, avec une minimisation de zone de fragilisation, dans des dimensions supérieures.

La **fig. 8** montre une autre variante de réalisation selon laquelle le complexe de renforcement **1** peut être associé sur au moins l'une de ses grandes faces **1a** ou **1b**, en surface des fils de renfort **3** de la première nappe **2** et/ou en surface des fils de renfort 7 de la deuxième nappe **6** à une couche **8** de poudre thermoplastique anti-effilochage, compatible avec les résines de transformation ultérieures. Cette couche **8** a pour fonction de renforcer la cohésion du complexe de renforcement, notamment lorsque les fils de chaîne de renfort sont nombreux et donc d'améliorer sa manutention. La couche **8** confère également, après polymérisation, une certaine raideur supplémentaire au complexe de renforcement **1** selon l'invention. La poudre anti-effilochage sera, par exemple, constituée ou à base de résine époxy ou polyéthylène téréphtalate. Une telle couche peut présenter un grammage de dépôt à l'unité de surface compris entre 2 et 50 g/m². Cette poudre anti-effilochage est déposée afin de recouvrir au moins partiellement les fils de renfort de la première nappe **2** et/ou de la deuxième nappe **6** et la liaison entre la couche **8** et la première nappe 2 de fils de renfort **3** et/ou la deuxième nappe **6** de fils de renfort **7**, peut être obtenue par la même opération que celle établissant la liaison entre la première nappe **2** et la nappe transversale **4**, d'une part, et la deuxième nappe **6** et la nappe transversale **4**, d'autre part.

De plus, la couche **8** permet par la suite de parer le complexe selon l'invention. En effet, comme le montre la **fig. 9**, cette couche **8** de poudre anti-effilochage est, par exemple, associée à un voile **9** d'aspect. Ce voile **9** peut être un non-tissé en matière synthétique comme le polyéthylène téréphtalate, l'acrylique ou en verre. Sa tenue sur le complexe **1** est assurée grâce à la poudre anti-effilochage.

Il pourrait également être prévu d'associer cette couche **8** de poudre thermoplastique à un mat de fibres coupées, par exemple de fibres de verre.

Le complexe de renforcement **1** selon l'invention peut être utilisé pour la fabrication d'engins de glisse, de skis ou de pales d'éolienne, ou d'éléments pultrudés.

L'invention ci-dessus n'est pas limitée aux exemples décrits et représentés, car diverses modifications peuvent y être apportées sans sortir de son cadre.

## Revendications

1. Complexe de renforcement (**1**) unidirectionnel, pour la réalisation de pièces composites à base de résine thermodurcissable ou thermoplastique injectée, dans lequel la fonction de renforcement est assurée par une série de fils de renfort (**3, 7**) parallèles entre eux et organisés en une ou deux nappes (**2, 6**) de façon à ce que le complexe de renforcement présente une couverture sensiblement de 100 %,
**caractérisé en ce que** :
■ des fils drainants (**3₁, 7₁**) parallèles entre eux et aux fils de renfort (**3, 7**) sont répartis, de façon espacée, au sein de la ou des nappes (**2, 6**) de fils de renfort (**3,7**), assurant un drainage de la résine thermodurcissable ou thermoplastique injectée lors de la réalisation de pièces composites, et
■ la liaison entre les fils constitutifs du complexe de renforcement (**3, 7, 3₁**, **7₁**) est assurée par une nappe ajourée transversale (**4**) de fils de liage (**5**) composés d'une âme fibreuse enrobée d'une matière thermoplastique et s'étendant transversalement aux fils de renfort (**3, 7**) et aux fils drainants (**3₁, 7₁**), en étant croisés avec ces derniers sans entrelacement, lesdits fils de renfort (**3, 7**) et fils drainants (**3₁, 7₁**) étant liés, à leur intersection avec les fils de liage (**5**) de la nappe transversale (**4**), par la matière thermoplastique.

2. Complexe de renforcement (**1**) selon la revendication 1, **caractérisé en ce qu'**au moins 95 % en poids du complexe de renforcement (**1**) est constitué de fils de renfort (**3, 7**).

3. Complexe de renforcement selon l'une des revendications 1 à 2, **caractérisé en ce que** les fils de liage (**5**) sont répartis par groupes espacés de deux, trois ou quatre fils.

4. Complexe de renforcement selon l'une des revendications 1 ou 3, **caractérisé en ce que** les fils de liage (**5**) ou groupes de fils de liage (**5**) sont espacés les uns des autres d'un pas d'espacement compris entre 1 et 10 cm.

5. Complexe de renforcement (**1**) selon l'une des revendications 1 à 4, **caractérisé en ce que** les fils de liage (**5**) enrobés présentent un titre compris entre 30 et 600 tex.

6. Complexe de renforcement **(1)** selon l'une des revendications 1 à 5, **caractérisé en ce que** les fils de liage **(5)** enrobés présentent un enrobage de matière thermoplastique compris entre 10 et 500 g pour 1 000 mètres linéaires.

7. Complexe de renforcement **(1)** selon l'une des revendications 1 à 6, **caractérisé en ce que** les fils drainants **(3₁)** possèdent une fonction drainante et se présentent sous la forme de fils de renfort, avantageusement en fibres de verre, habillés de fibres de capillarité suffisante pour draincr la résine injectée.

8. Complexe de renforcement **(1)** selon l'une des revendications 1 à 7, **caractérisé en ce que** les fils drainants **(3₁)** se présentent sous la forme de fils guipés, c'est-à-dire de fils de renfort sur chacun desquels un monofilament vient s'enrouler.

9. Complexe de renforcement **(1)** selon l'une des revendications 1 à 8, **caractérisé en ce que** les fils drainants **(3₁, 7₁)** sont espacés les uns des autres au sein de la ou des nappes **(2, 6)** de fils de renfort **(3, 7),** selon un pas d'espacement compris entre 10 et 500 mm.

10. Complexe de renforcement **(1)** selon l'une des revendications 1 à 9, **caractérisé en ce que** des fils raidisseurs sont répartis, de façon espacée, au sein de la ou des nappes **(2, 6)** de fils de renfort **(3, 7)** et s'étendent entre les fils drainants **(3₁),** parallèlement à ces derniers.

11. Complexe de renforcement **(1)** selon l'une des revendications 1 à 10, **caractérisé en ce que** les fils de renfort **(3)** sont répartis en une nappe **(2)** de fils jointifs.

12. Complexe de renforcement **(1)** selon l'une des revendications 1 à 10, **caractérisé en ce que** les fils de renfort **(3, 7)** sont répartis en deux nappes **(2, 6)** de fils jointifs.

13. Complexe de renforcement **(1)** selon l'une des revendications 1 à 12, **caractérisé en ce que** l'une des nappes **(2)** de fils de renfort **(3)** est recouverte au moins partiellement d'une poudre **(8)** thermoplastique anti-effilochage.

14. Complexe de renforcement **(1)** selon la revendication 13, **caractérisé en ce que** la poudre **(8)** thermoplastique anti-effilochage est recouverte par un voile **(9)** d'aspect, intimement lié au produit **(1)** par fusion au moins partielle de la poudre **(8)** anti-effilochage.

15. Complexe de renforcement **(1)** selon la revendication 14, **caractérisé en ce que** la poudre **(8)** anti-effilochage est associée à un mat de fibres de verre coupées.

16. Complexe de renforcement **(1)** selon l'une des revendications 1 à 15, **caractérisé en ce que** la matière thermoplastique des fils de liage **(5)** est choisie parmi les suivantes : le polypropylène, le polyéthylène, la polyamide, la polyéthylène téréphtalate, le polyester, l'éthylène vinyl acétate ou leurs mélanges.

17. Complexe de renforcement **(1)** selon l'une des revendications 1 à 16, **caractérisé en ce que** les fils de renfort **(3** et **7)** ainsi que l'âme enrobée des fils de liage (**5**) et les fils de renfort constitutifs des fils drainants **(3₁, 7₁)** sont en une matière choisie parmi les suivantes : verre, basalte, carbone, aramide, synthétiques HP.

18. Procédé de fabrication d'un complexe de renforcement **(1)** selon la revendication 1, **caractérisé en ce qu'**il comprend les étapes suivantes :
■ constituer une première nappe non ajourée **(2)** de fils de renfort **(3)** parallèles entre eux dans laquelle des fils drainants **(3₁)** parallèles entre eux et aux fils de renfort **(3)** sont répartis, superposer, sur cette première nappe, une nappe transversale **(4)** de fils de liage **(5)** espacés et composés d'une âme fibreuse enrobée d'une matière thermoplastique s'étendant transversalement aux fils de renfort **(3)** et aux fils drainants **(3₁)** de la première nappe **(2)** en étant croisés sans entrelacement,
■ et lier lesdites nappes par chauffage entraînant la fusion au moins partielle de la matière thermoplastique des fils de liage **(5),** compression et refroidissement.

19. Utilisation d'un complexe de renforcement **(1)** selon l'une des revendications 1 à 17, pour la fabrication de skis, de pales d'éoliennes, ou d'éléments pultrudés.

## Claims

1. A unidirectional reinforcement complex (1), for making composite parts based on injected thermosetting or thermoplastic resin, wherein the reinforcement function is provided by a series of reinforcing threads (3, 7) parallel to each other and organized as one or two laps (2, 6) so that the reinforcement complex has a substantially 100% cover,
**characterized in that**:
• draining threads (3₁, 7₁) parallel to each other and to the reinforcing thread (3, 7) are distributed in a spaced-out way within the lap(s) (2, 6) of reinforcing threads (3, 7) providing drainage of the injected thermosetting or thermoplastic resin when making composite parts, and
• the link between the constitutive threads of the reinforcement complex (3, 7, 3₁, 7₁) is provided by a transverse openworked lap (4) of binding threads (5) consisting of a fiber core coated with thermoplastic material and extending transversely to the reinforcing threads (3, 7) and to the draining threads (3₁, 7₁), while being crossed with the latter without any interlacing, said reinforcing threads (3, 7) and draining threads (33_{1,} 7₁) being bound, at their intersection with binding threads (5) of the transverse lap (4), by the thermoplastic material.

2. The reinforcement complex (1) according to claim 1, **characterized in that** at least 95% by weight of the reinforcement complex (1) consist of reinforcing threads (3, 7).

3. The reinforcement complex (1) according to any of claims 1 to 2, **characterized in that** the binding threads (5) are distributed in spaced-out groups of two, three or four threads.

4. The reinforcement complex (1) according to any of claims 1 or 3, **characterized in that** the binding threads (5) or groups of binding threads (5) are spaced out from each other by a spacing pitch comprised between 1 and 10 cm.

5. The reinforcement complex (1) according to any of claims 1 to 4, **characterized in that** the coated binding threads (5) have a titer comprised between 30 and 600 tex.

6. The reinforcement complex (1) according to any of claims 1 to 5, **characterized in that** the coated binding threads (5) have a coating of thermoplastic material comprised between 10 and 500 g for 1,000 linear meters.

7. The reinforcement complex (1) according to any of claims 1 to 6, **characterized in that** the draining threads (3₁) have a draining function and appear as reinforcing threads, advantageously as glass fibers, covered with fibers of sufficient capillarity for draining the injected resin.

8. The reinforcement complex (1) according to any of claims 1 to 7, **characterized in that** the draining threads (3₁) appear as wrapped threads, i.e. reinforcing threads on each of which a monofilament will be wound.

9. The reinforcement complex (1) according to any of claims 1 to 8, **characterized in that** the draining threads (3₁, 7₁) are spaced out from each other within the laps (2, 6) of reinforcing threads (3, 7) according to a spacing pitch comprised between 10 and 500 mm.

10. The reinforcement complex (1) according to any of claims 1 to 9, **characterized in that** stiffening threads are distributed in a spaced-out way, within the lap(s) (2, 6) of reinforcing threads (3, 7) and extending between the draining threads (3₁), parallel to the latter.

11. The reinforcement complex (1) according to any of claims 1 to 10, **characterized in that** the reinforcing threads (3) are distributed in a lap (2) of joined threads.

12. The reinforcement complex (1) according to any of claims 1 to 10, **characterized in that** the reinforcing threads (3, 7) are distributed as two laps (2, 6) of joined threads.

13. The reinforcement complex (1) according to any of claims 1 to 12, **characterized in that** one of the laps (2) of reinforcing threads (3) is at least partly covered with an anti-fraying thermoplastic powder (8).

14. The reinforcement complex (1) according to claim 13, **characterized in that** the anti-fraying thermoplastic powder (8) is covered by an aspect web (9), intimately bound to the product (1) by at least partial melting of the anti-fraying powder (8).

15. The reinforcement complex (1) according to claim 14, **characterized in that** the anti-fraying powder (8) is associated with a mat of cut glass fibers.

16. The reinforcement complex (1) according to any of claims 1 to 15, **characterized in that** the thermoplastic material of the binding threads (5) is selected from the following: polypropylene, polyethylene, polyamide, polyethylene terephthalate, polyester, ethylvinyl acetate or mixtures thereof.

17. The reinforcement complex (1) according to any of claims 1 to 16, **characterized in that** the reinforcing threads (3 and 7) as well as the core coated with binding threads (5) and the constitutive reinforcing threads of the draining threads (3₁, 7₁) are in a material selected from the following: glass, basalt, carbon, aramid, HP synthetics.

18. A method for making a reinforcement complex (1) according to claim 1, **characterized in that** it comprises the following steps:
• forming a first non-openworked lap (2) with reinforcing threads (3) parallel to each other, wherein draining threads (3₁) parallel to each other and to the reinforcing threads (3) are distributed, superposed on this lap, a transverse lap (4) of binding threads (5) spaced out and consisting of a fiber cores coated with thermoplastic material extending transversely to the reinforcing threads (3) and to the draining threads (3₁) of the first lap (2) while being crossed without interlacing,
• and binding said laps by heating, causing at least partial melting of the thermoplastic material of the binding threads (5), by compression and cooling.

19. The use of a reinforcement complex (1) according to any of the claims 1 to 17, for making skis, wind turbine blades, or pultruded elements.

## Patentansprüche

1. Unidirektionaler Verstärkungskomplex (1) für die Herstellung von Verbundteilen auf der Basis eines eingespritzten Duro- oder Thermoplasten, bei dem die Verstärkungsfunktion durch eine Reihe von Verstärkungsfäden (3, 7) sichergestellt ist, die parallel zueinander verlaufen und die in einer oder zwei Lagen (2, 6) angeordnet sind, so daß der Verstärkungskomplex eine im wesentlichen 100 %ige Abdeckung aufweist, **dadurch gekennzeichnet, daß**:
- Drainagefäden (3₁, 7₁), die zueinander sowie zu den Verstärkungsfäden (3, 7) parallel verlaufen, innerhalb der oder den Lage(n) (2, 6) aus Verstärkungsfäden (3, 7) beabstandet verteilt sind, wobei sie eine Drainage des während der Herstellung von Verbundteilen eingespritzten Duro- oder Thermoplasten sicherstellen, und daß
- die Verbindung zwischen den den Verstärkungskomplex (3, 7, 3₁, 7₁) bildenden Fäden durch eine durchbrochene Querlage (4) aus Bindefäden (5) sichergestellt ist, die aus einer mit einem Thermoplasten ummantelten Faserseele bestehen und die zu den Verstärkungsfäden (3, 7) und zu den Drainagefäden (3₁, 7₁) quer verlaufen und dabei mit letzteren unverflochten gekreuzt sind, wobei die Verstärkungsfäden (3, 7) und die Drainagefäden (3₁, 7₁) an ihrer Kreuzungsstelle mit den Bindefäden (5) der Querlage (4) durch den Thermoplasten verbunden sind.

2. Verstärkungskomplex (1) nach Anspruch 1, **dadurch gekennzeichnet, daß** wenigstens 95 Gew.-% des Verstärkungskomplexes (1) von Verstärkungsfäden (3, 7) gebildet ist.

3. Verstärkungskomplex nach einem der Ansprüche 1 bis 2, **dadurch gekennzeichnet, daß** die Bindefäden (5) in beabstandeten Gruppen aus zwei, drei oder vier Fäden verteilt sind.

4. Verstärkungskomplex nach einem der Ansprüche 1 oder 3, **dadurch gekennzeichnet, daß** die Bindefäden (5) oder Gruppen von Bindefäden (5) um einen Abstand von 1 bis 10 cm voneinander beabstandet sind.

5. Verstärkungskomplex (1) nach einem der Ansprüche 1 bis 4, **dadurch gekennzeichnet, daß** die ummantelten Bindefäden (5) einen Titer im Bereich zwischen 30 und 600 tex aufweisen.

6. Verstärkungskomplex (1) nach einem der Ansprüche 1 bis 5, **dadurch gekennzeichnet, daß** die ummantelten Bindefäden (5) eine Thermoplastummantelung zwischen 10 und 500 g bei 1.000 laufenden Metern aufweisen.

7. Verstärkungskomplex (1) nach einem der Ansprüche 1 bis 6, **dadurch gekennzeichnet, daß** die Drainagefäden (3₁) eine Drainagefunktion haben und in Form von Verstärkungsfäden, vorteilhafterweise als Glasfasern vorliegen, die von Fasern mit ausreichender Kapillarität umhüllt sind, um das eingespritzte Harz zu drainieren.

8. Verstärkungskomplex (1) nach einem der Ansprüche 1 bis 7, **dadurch gekennzeichnet, daß** die Drainagefäden (3₁) in Form von umsponnenen Fäden vorliegen, d.h. von Verstärkungsfäden, um die sich jeweils ein Einzelfaden wickelt.

9. Verstärkungskomplex (1) nach einem der Ansprüche 1 bis 8, **dadurch gekennzeichnet, daß** die Drainagefäden (3₁, 7₁) innerhalb der Lage oder Lagen (2, 6) aus Verstärkungsfäden (3, 7) um einen Abstand zwischen 10 und 500 mm voneinander beabstandet sind.

10. Verstärkungskomplex (1) nach einem der Ansprüche 1 bis 9, **dadurch gekennzeichnet, daß** Versteifungsfäden innerhalb der Lage oder Lagen (2,6) aus Verstärkungsfäden (3, 7) beabstandet verteilt sind und sich zwischen den Drainagefäden (3₁) parallel zu diesen erstrecken.

11. Verstärkungskomplex (1) nach einem der Ansprüche 1 bis 90, **dadurch gekennzeichnet, daß** die Verstärkungsfäden (3) in einer Lage (2) aus aneinander liegenden Fäden verteilt sind.

12. Verstärkungskomplex (1) nach einem der Ansprüche 1 bis 10, **dadurch gekennzeichnet, daß** die Verstärkungsfäden (3, 7) in zwei Lagen (2, 6) aus aneinander liegenden Fäden verteilt sind.

13. Verstärkungskomplex (1) nach einem der Ansprüche 1 bis 12, **dadurch gekennzeichnet, daß** die eine der Lagen (2) aus Verstärkungsfäden (3) wenigstens teilweise mit einem thermoplastischen Pulver (8) zum Schutz vor Zerfaserung beschichtet ist.

14. Verstärkungskomplex (1) nach Anspruch 13, **dadurch gekennzeichnet, daß** das thermoplastische Zerfaserungsschutzpulver (8) mit einem sichtbaren Vlies (9) bedeckt ist, das durch wenigstens teilweises Schmelzen des Zerfaserungsschutzpulvers (8) mit dem Produkt (1) innig verbunden ist.

15. Verstärkungskomplex (1) nach Anspruch 14, **dadurch gekennzeichnet, daß** das Zerfaserungsschutzpulver (8) mit einer Matte aus geschnittenen Glasfasern verbunden ist.

16. Verstärkungskomplex (1) nach einem der Ansprüche 1 bis 15, **dadurch gekennzeichnet, daß** der Thermoplast der Bindefäden (5) aus den folgenden ausgewählt ist, nämlich Polypropylen, Polyethylen, Polyamid, Polyethylenterephthalat, Polyester, Ethylenvinylacetat oder ihren Mischungen.

17. Verstärkungskomplex (1) nach einem der Ansprüche 1 bis 16, **dadurch gekennzeichnet, daß** die Verstärkungsfäden (3 und 7) sowie die ummantelte Seele der Bindefäden (5) und die die Drainagefäden (3₁, 7₁) bildenden Verstärkungsfäden aus einem Material bestehen, das aus den folgenden ausgewählt ist, nämlich Glas, Basalt, Kohlenstoff, Aramid, HP-Kunststoffen.

18. Verfahren zum Herstellen eines Verstärkungskomplexes (1) nach Anspruch 1, **dadurch gekennzeichnet, daß** es die folgenden Schritte umfaßt:
- Ausbilden einer ersten nicht durchbrochenen Lage (2) aus parallel zueinander verlaufenden Verstärkungsfäden (3), in der Drainagefäden (3₁), die zueinander und zu den Verstärkungsfäden (3) parallel verlaufen, verteilt sind, Anordnen - auf dieser ersten Lage - einer Querlage (4) aus Bindefäden (5), die beabstandet sind und aus einer mit einem Thermoplasten ummantelten Faserseele bestehen und die zu den Verstärkungsfäden (3) sowie zu den Drainagefäden (3₁) der ersten Lage (2) quer verlaufen und dabei unverflochten gekreuzt sind, und
- Verbinden der Lagen durch Erhitzen, das zum wenigstens teilweisen Schmelzen des Thermoplasten der Bindefäden (5) führt, durch Verdichten und Abkühlen.

19. Verwendung eines Verstärkungskomplexes (1) nach einem der Ansprüche 1 bis 17, für die Herstellung von Skiern, Blättern von Windkraftanlagen oder pultrudierten Elementen.
